**Europäisches Patentamt**

**European Patent Office**

**Office européen des brevets**

(19)

(11) Veröffentlichungsnummer : **0 360 183 B1**

(12)

# EUROPÄISCHE PATENTSCHRIFT

(45) Veröffentlichungstag der Patentschrift :
**27.01.93 Patentblatt 93/04**

(51) Int. CI.⁵ : **C09K 3/18**

(21) Anmeldenummer : **89117197.7**

(22) Anmeldetag : **18.09.89**

(54) Enteisungsmittel bzw. Vereisungsschutzmittel für Flugzeuge.

(30) Priorität : **23.09.88 DE 3832310**

(43) Veröffentlichungstag der Anmeldung :
**28.03.90 Patentblatt 90/13**

(45) Bekanntmachung des Hinweises auf die
Patenterteilung :
**27.01.93 Patentblatt 93/04**

(84) Benannte Vertragsstaaten :
**AT BE CH DE FR GB LI NL SE**

(56) Entgegenhaltungen :
**EP-A- 0 050 700**
**EP-A- 0 231 869**
**EP-A- 0 257 720**
**DE-A- 1 940 825**
**US-A- 3 940 356**

(73) Patentinhaber : **BASF Aktiengesellschaft**
**Carl-Bosch-Strasse 38**
**W-6700 Ludwigshafen (DE)**

(72) Erfinder : **Schrimpf, Hans**
**Sudetenstrasse 3**
**W-6704 Mutterstadt (DE)**
Erfinder : **Krebs, Hans**
**Muehlpfad 69**
**W-6733 Hassloch (DE)**
Erfinder : **Liebold, Gert, Dr.**
**Hundert Morgen 37**
**W-6803 Edingen-Neckarhausen (DE)**
Erfinder : **Frey, Guenter, Dr.**
**Mainstrasse 13**
**W-6701 Dannstadt-Schauernheim (DE)**

**Beschreibung**

Die Erfindung betrifft neue Mittel bestehend aus Glykolen, Wasser, vernetztem Acrylsäurepolymer als Verdicker, Korrosionsinhibitoren, Neutralisationsmittel zur Einstellung des pH-Wertes sowie einem nichtionischen Tensid auf Basis eines oxethylierten Alkohols. Das neue Mittel weist den besonderen Vorteil auf, daß es in einem anwendungs bezogenen Temperaturbereich von 0°C bis -35°C aufgrund seiner optimalen rheologischen Eigenschaften sehr gute Abfließeigenschaften beim Start des Flugzeugs besitzt und somit einen sehr niedrigen Auftriebsverlust gewährleistet. Trotz der sehr niedrigen Viskosität des neuen Mittels wird eine Vorhaltezeit gegenüber gefrierendem Sprühwasser von 30 Minuten gemäß AEA Water-Spray-Endurance Test (Association of European Airlines) erreicht.

Enteisungsmittel bzw. Vereisungsschutzmittel für Flugzeuge sind z.B. aus EP-A1-0 231 869 bekannt und bestehen im wesentlichen aus:

a) 40 bis 70 Gew.-% vorzugsweise 50 bis 60 Gew.-% von einem Glykol aus der Gruppe der Alkylenglykole mit 2 bis 3 C-Atomen und Oxalkylenglykole mit 4 bis 6 C-Atomen.

b) 0, 1 bis 1 Gew.-% vorzugsweise 0,2 bis 0,7 Gew.-% von vernetzten Acrylpolymeren, bestehend aus 1 Gew.-Teil von einem vernetzten Copolymeren aus Acrylsäure oder einem Alkalimetallacrylat und Acrylamid mit 10 bis 90 Gew.-%, vorzugsweise 20 bis 80 Gew.-%, copolymerisierter Einheiten der Acrylsäure oder des Alkalimetallacrylates und 10 bis 90 Gew.-%, vorzugsweise 3 bis 8 Gew.-Teilen, von einem vernetzten Homopolymeren der Acrylsäure oder eines Alkalimetallacrylates, mit der Maßgabe, daß das Homopolymere und das Copolymere jeweils eine Viskosität von 5000 bis 70000 mPa · S, vorzugsweise 10000 bis 50000 mPa · S, und ein laminares Strömungsverhalten bei einer Schergeschwindigkeit von 0 bis 20000 $s^{-1}$ besitzen, wobei die Viskosität und das laminare Strömungsverhalten jeweils mit Hilfe einer 0,5 gew.-%igen wäßrigen Lösung von 20°C und einem pH-Wert von 7 mit einem Brookfield-Viskosimeter bei 20 UpM bzw. mit einem Rotationsviskosimeter für Schergeschwindigkeiten bis zu 20000 $s^{-1}$ gemessen worden ist.

c) 0,05 bis 1 Gew.-% von einem Tensid aus der Gruppe der Alkalimetall-Alkylarylsulfonate,

d) 0,01 bis 1 Gew.-%, vorzugsweise 0,03 bis 0,5 Gew.-% von mindestens einem Korrosionsinhibitor,

e) den drei folgenden basischen Verbindungen $e_1$, bis $e_3$ in den angegebenen Mengen zur Einstellung des pH-Wertes des Mittels auf 7,5 bis 11, vorzugsweise 8 bis 10.

$e_1$) 0,01 bis 1 Gew.-%, vorzugsweise 0,05 bis 0,5 Gew.-%, Ammoniak, Monoethanolamin, Diethanolamin oder Triethanolamin oder eine Mischung davon (als dem ersten basischen Vertreter),

$e_2$) 0,05 bis 0,7 Gew.-%, vorzugsweeise 0,07 bis 0,4 Gew.-%, Kaliumhydroxid (als dem zweiten basischen Vertreter) und

$e_3$) 0,01 bis 0,5 Gew.-%, vorzugsweise 0,03 bis 0,15 Gew.-%, von einem weiteren Alkalimetallhydroxid, vorzugsweise Natriumhydroxid (als dem dritten basischen Vertreter), und aus

f) Wasser als den restlichen Gewichtsprozenten, Gewichtsprozente jeweils bezogen auf das Gewicht des Mittels.

Bekannte Flugzeugenteisungsmittel bzw. Vereisungsschutzmittel der vorgenannten Art haben sich in der Praxis bislang bewährt. Bei Flugtests zur Ermittlung des Auftriebsverlustes von Flugzeugvereisungsschutzmitteln und in Windkanalversuchen hat sich jedoch gezeigt, daß das Abfließverhalten solcher vorgenannt beschriebener Flugzeugvereisungsschutzmittel mit einem Viskositätsbereich von 10000 mPa · s bis 20000 mPa · s, gemessen mit einem Brookfieldviskosimeter bei 0,3 UpM von +20°C bis -25°C, noch nicht optimal ist.

Die bisher verfügbaren Enteisungsmittel verursachen nämlich beim Start des Flugzeuges einen Auftriebsverlust im Bereich von 5 bis 8 %. Aufgrund dieser Testergebnisse hatte die Association European Airlines (AEA) Anfang 1988 gefordert, daß die seinerzeit im Einsatz befindlichen Enteisungsmittel hinsichtlich ihres Abfließverhaltens von der Tragfläche verbessert werden müssen, um den Auftriebsverlust beim Startvorgang weiter zu reduzieren.

Eine Verbesserung des Abfließverhaltens solcher nicht-newtonschen Flüssigkeiten läßt sich z.B. durch eine Absenkung der Viskosität der unverdünnten Flüssigkeit von z.B. 10000 mPa · s auf 2000 bis 4000 mPa · s bei 0,3 UpM erreichen, wenn dabei die Elastizität der Flüssigkeit nicht wesentlich erhöht wird.

Allgemein bestand die Aufgabe, ein Flugzeugvereisungsschutzmittel zur Verfügung zu stellen, dessen Abfließverhalten sich im gesamten anwendungsbezogenen Temperaturbereich von 0°C bis -35°C vergleichbar günstig verhält. Dies kann u.a. dadurch beschrieben werden, daß sich die Viskosität der Flüssigkeit bei den vorgenannten Temperaturen nur in einem engen Viskositätsbereich von etwa 2000 mPa · s verändern darf.

Ein solches Mittel muß nicht nur gute rheologische Eigenschaften besitzen, sondern es muß auch gewährleistet sein, daß die Vorhaltezeit gegenüber gefrierendem Regen (holdover time), bestimmt nach "AEA-Water-Spray Endurance Test", mindestens 30 min beträgt. Diese Forderung ist von Flüssigkeiten mit niedrigen Viskositäten nur schwer erfüllbar.

Bei bekannten Flugzeugenteisungs- und Vereisungsschutzmittel nimmt mit abnehmender "Ruhe-Viskosität" auch die Vorhaltezeit gegenüber gefrierendem Regen ab.

Enteisungs- und Vereisungsschutzflüssigkeiten für Flugzeuge werden bei der Anwendung mitunter mit Wasser verdünnt, vorzugsweise mit Verhältnis 75 (Mittel):25 (Wasser) oder 50 : 50. Bei der Verwendung von hartem Wasser konnte bei den bislang verwendeten Enteisungsmitteln je nach Wasserhärte eine entsprechende Abnahme der "Ruhe-Viskosität" und damit verbunden auch eine mehr oder weniger starke Abnahme der hold over time festgestellt werden.

Weil demineralisiertes Wasser zur Verdünnung des Mittels auf den Flughäfen in der Regel nur selten verfügbar ist, sollte bei der Verwendung von Trinkwasser die Viskosität der verdünnten Lösung nicht absinken, um eine verstärkte Abnahme der Vorhaltezeit gegenüber gefrierendem Regen zu vermeiden. Das Erreichen einer holdover time (nach AEA Water-Spray Endurance Test) von mindestens 20 min bei einer Lösung von 75 (Mittel):25 (Wasser) wäre wünschenswert.

Im besonderen bestand daher die Aufgabe, ein Enteisungs- und Vereisungsschutzmittel für Flugzeuge zur Verfügung zu stellen, das die hohen Anforderungen einer niedrigen Viskosität zur Erzielung eines guten Abfließverhaltens beim Starten im gesamten Temperaturbereich von ca. 0 bis etwa -35°C unter Beibehaltung einer Mindestverzögerungszeit zwischen Enteisung und Wiedervereisen bei gefrierendem Sprühwasser von mindestens 30 min (nach "AEA Water-Spray Endurance Test") erfüllt. Ein weiteres Ziel wäre die Mischbarkeit des Mittels mit hartem Wasser ohne Viskositätsabfall der wäßrigen Lösungen.

Es wurde nun überraschenderweise gefunden, daß die noch vorhandenen Nachteile der bekannten Enteisungs- und Vereisungsschutzmittel für Flugzeuge dadurch beseitigt werden und somit ein Mittel mit den vorgenannten anzustrebenden Eigenschaften erhalten wird, wenn man als Verdicker eine vernetzte Polyacrylsäure, zur Einstellung des pH-Wertes Natriumhydroxid oder Natrium- und Kaliumhydroxid in einem bestimmten Verhältnis zueinander und ein nichtionisches Tensid aus der Gruppe der oxethylierten Alkohole, insbesondere Oxoalkohole, verwendet.

Im einzelnen enthält das neue Enteisungsmittel bzw. Vereisungsschutzmittel für Flugzeuge auf der Basis von Glykolen und Wasser mit vernetzter Polyacrylsäure als Verdicker im wesentlichen:

a) 40 bis 70 Gew.-%, vorzugsweise 50 bis 60 %, eines Glykols aus der Gruppe der Alkylenglykole mit 2 bis 3C-Atomen und/oder Oxalkylenglykols mit 4C-Atomen oder der Gemische,

b) 0,1 bis 1,0 Gew.-%, vorzugweise 0,3 bis 0,7 Gew.-%, einer vernetzten Polyacrylsäure,

c) 0,2 bis 0,7, vorzugsweise 0,3 bis 0,5 Gew.-% einer Mischung aus Kalium- und Natriumhydroxid mit bis zu 70 Gew.-% Kaliumhydroxidanteilen, vorzugsweise im Verhältnis 2,5 : 1 bis 1 : 2,5, besonders bevorzugt, im Verhältnis von etwa 1,5 : 1,0, sowie gegebenenfalls reinem Natriumhydroxid,

d) 0,05 bis 2,0 Gew.-%, vorzugsweise 1,0 bis 1,7 Gew.-%, mindestens eines Korrosionsinhibitors, vorzugsweise 2 Korrosionsinhibitoren,

e) 0,02 bis 1,5 Gew.-%, vorzugsweise 0,05 bis 0,3 Gew.-% von einem nichtionischen Tensid aus der Gruppe der höheren Alkohole, vorzugsweise der $C_{10}$- bis $C_{20}$ Oxoalkohole, oxethyliert mit 1 bis 10 Molekülen eines niedermolekularen Alkoxids, vorzugsweise Ethylenoxid,

f) 0,01 bis 0,1 Gew.-% eines Oxidationsstabilisator.

g) Wasser als restliche Komponente, alle Gewichtsprozente, bezogen auf das fertige unverdünnte Mittel.

Es hat sich herausgestellt, daß mit der genannten Kombination vernetzte Polyacrylsäure, sowie vorzugsweise Kalium- und Natriumhydroxid im Verhältnis 1 : 1 bis 1,5 : 1 oder Natriumhydroxid die gewünschten Eigenschaften einer nahezu konstanten niedrigen Viskosität bei tiefen Temperaturen und damit ein gutes Abfließverhalten erreicht wird. Durch die Zugabe eines nichtionischen Tensides aus der Gruppe der oxethylierten Oxoalkohole wird sogar eine Verbesserung der Vorhaltezeit gegenüber gefrierendem Regen erreicht, die bei vergleichbaren Viskositäten deutlich über den Zeiten der bekannten Enteisungs- und Vereisungsschutzmittel liegt und nicht zu erwarten war. Die Viskositäts-Empfindlichkeit bekannter Enteisungs- und Vereisungsschutzmittel gegenüber hartem Wasser konnte bei dem erfindungsgemäßen Mittel bis zu einem Härtegrad von etwa 20°dGH beseitigt werden. Das neue Mittel zeichnet sich ferner bei hoher Verdünnung mit Wasser durch eine im Vergleich zu bekannten Vereisungsmitteln sehr geringe Schaumbildung aus.

Die Komponente a) des erfindungsgemäßen Enteisungsmittels- bzw. Vereisungsschutzmittel ist vorzugsweise Propylenglykol (1,2-Propylenglykol oder 1,3-Propylenglykol) und/oder Diethylenglykol.

Die Komponente b) ist z.B. eine handelsübliche vernetzte Polyacrylsäure, die in Form einer 0,5 gew.-%igen wäßrigen Lösung bei einem pH-Wert von 7,0, eine Viskosität von 5000 bis 60 000 mPa · s bei 20°C, gemessen mit einem Brookfield-Viskosimeter bei 20 UpM, aufweist, z.B. CARBOPOL® 934 der Fa. Goodrich Chemical (Deutschland) GmbH.

Die Komponente c) mit der der pH-Wert des erfindungsgemäßen Mittels auf 7,0 bis 9,5 eingestellt wird, besteht vorzugsweise aus einer Mischung aus KOH und NaOH im Gewichtsverhältnis 2,5 : 1 bis 1 : 2,5.

Die Komponente d) umfaßt Korrosionsinhibitoren, wie sie für Flüssigkeiten auf Basis Glykolen und Wasser gebräuchlich sind.

EP 0 360 183 B1

Geeignete Korrosionsinhibitoren sind z.B. Natriumnitrat, das Kalium- oder Natriumsalz der Sebazinsäure, Butin-2-diol-1,4 oder Benzotriazol.

Die Komponente e), die dem erfindungsgemäßen Mittel zur Erzielung der geforderten Vorhaltezeit gegenüber gefrierendem Regen von mindestens 30 min beigegeben wird, ist ein nichtionisches Tensid der Gruppe oxethylierter höherer Alkohole, insbesondere Oxoalkohole mit 10 bis 20 C-Atomen und 1 bis 10 eines Alkoxids, insbesondere Ethylenoxid. Oxoalkohole mit 10 bis 20°C-Atomen sind z.B. die durch Oxierung von $C_9$-, $C_{12}$- oder $C_{16}$-Olefinen erhältlichen Alkohole oder Mischungen dieser Alkohole.

Die Komponente g) ist Wasser. Es wird hierfür vorzugsweise vollentsalztes Wasser verwendet.

Die Herstellung der erfindungsgemäßen Zusammensetzung erfolgt durch Zumischen der einzelnen Komponenten in beliebiger Reihenfolge in einem Rührbehälter.

Eine vorteilhafte Herstellungsweise ist wie folgt:

In einem Behälter wird Wasser vorgelegt und die in Pulverform vorliegende vernetzte Polyacrylsäure (Komponente b) wird bei Raumtemperatur dem Wasser zugegeben und die Mischung solange weitergerührt bis sich der Verdicker im Wasser homogen verteilt vorliegt. Anschließend werden die Inhibitoren und die Neutralisationsmittel bis zum gewünschten pH-Wert unter Rühren eingebracht. Danach wird das Glykol zugegeben und solange gerührt, bis eine homogene Mischung entstanden ist.

Das erfindungsgemäße Enteisungsmittel bzw. Vereisungsschutzmittel zeichnet sich durch nachfolgende Eigenschaften aus:

Eine sehr niedrige Vioskosität im Temperaturbereich von 0°C bis -35°C, wobei die Viskosität sich lediglich im engen Bereich von etwa 1000 bis 2000 mPa · s bei 0,3 Upm (Brookfieldviskosimeter) verändert, ein sehr gutes Abfließverhalten von der Tragfläche des Flugzeuges beim Startvorgang, eine sehr lange "holdover time", kein Viskositätsabfall bei der Verdünnung mit hartem Wasser, eine gute Antikorrosivität und Verträglichkeit mit den Flugzeugwerkstoffen, eine gute Lagerstabilität sowie eine nur geringe Schaumbildung bei hoher Verdünnung mit Wasser.

Zur Konservierung der enteisten Flugzeugflächen wird das erfindungsgemäße Enteisungsmittel bzw. Vereisungsschutzmittel unverdünnt eingesetzt.

Die Erfindung wird mit den folgenden Beispielen näher erläutert.

Beispiel 1

Es wurde eine erfindungsgemäße Zusammensetzung hergestellt durch Mischen der folgenden Komponenten:

a) 50 Gew.% 1,2-Propylenglykol
b) 0,53 Gew.% CARBOPOL® 934 der Firma B.F. Goodrich Chemical (Deutschland) GmbH
c)
0,05 Gew.-% Natriumnitrat
0,05 Gew.-% Sebazinsäure
d) 0,1 Gew.-% eines Oxoalkoholes mit 13 bis 15 Kohlenstoffatomen und mit 3 Molekülen Ethylenoxid oxethyliert
e)
0,15 Gew.-% Natriumhydroxid
0,22 Gew.-% Kaliumhydroxid
f) 0,01 Gew.-% Oxidationsstabilisator
g) 48,89 Gew.-% Wasser.

In einem Rührbehälter wurde der pulverförmige Verdicker (Komponente b) in das vorgelegte Wasser eingerührt bis eine homogene Mischung vorlag. Anschließend wurden die Korrosionsinhibitoren (Komponente c), das Tensid (Komponente d), der Oxidationsstabilisator und die Neutralisationsmittel (Komponente e) in beliebiger Reihenfolge eingerührt bis eine homogene Lösung vorlag. Danach wurde 1,2-Propylenglykol zugegeben und solange gerührt, bis eine homogene Mischung entstand. Der pH-Wert der fertigen Mischung betrug 9,0.

Das erfindungsgemäße Enteisungs- und Vereisungsschutzmittel hatte die folgenden Eigenschaften:

Die "holdover time" nach dem AEA Water-Spray Endurance Test betrug 37 min und für die Verdünnung 75 : 25 (AEA-Wasser) betrug diese Zeit 35 min.

4

```
Schaumprüfung einer 2 gew.-%igen wäßrigen Lösung:

(Prüfung nach ASTM D 892)
Schaummenge nach 5 min                    :           350 cm3
Schaummenge nach 5 min Standzeit          :            80 cm3.
```

Die Viskositätswerte bei verschiedenen Temperaturen und einer Schergeschwindigkeit von 0,084 $s^{-1}$ (0,30 Upm) und 8,45 $s^{-1}$ (30 UpM), gemessen mit einem Brookfield-Viskosimeter, sind nachstehend aufgeführt:

| Temperatur | Brookfield-Viskosität bei | | |
| --- | --- | --- | --- |
| | 0,3 Upm | 30 Upm | Verdünnung |
| | | | 75 : 25 (AEA-Wasser) |
| (°C) | (mPa.s) | | 0,3 UpM |
| + 20 | 3000 | 370 | 10000 |
| ± 0 | 2200 | 440 | 19000 |
| − 5 | 1600 | 460 | 14000 |
| − 10 | 1800 | 500 | 13000 |
| − 25 | 1000 | 520 | − |

Beispiel 2

Es wurde eine erfindungsgemäße Zusammensetzung hergestellt durch Mischen der folgenden Komponenten:

a) 60 Gew.-% Diethylenglykol

b) 35 Gew.-% 1,5 Gew.-% wäßriger Verdickerlösung mit CARBOPOL® 934

c) 0,05 Gew.-% Natriumnitrat, 0,1 Gew.-% Sebazinsäure, 1,0 Gew.-% Buten-2-diol-(1,4)

d) 0,05 Gew.-% eines Oxoalkohols mit 13 bis 15 Kohlenstoffatomen und 3 Molekülen Ethylenoxid oxethyliert

e) 0,2 Gew.-% Natriumhydroxid

f) 0,1 Gew.-% Kaliumhydroxid

g)

0,05 Gew.-% Oxidationsstabilisator

3,45 Gew.-% Wasser.

Das Mischen der Komponenten a) bis g) erfolgt wie in Beispiel 1 beschrieben. Die fertige Mischung hatte den pH-Wert 7,2.

Die "holdover time" betrug 39 min und für die Verdünnung 75 : 25 (AEA-Wasser) betrug diese Zeit 23 min.

```
Schaumprüfung wie in Beispiel 1:
Schaummenge nach 5 min                    :           310 cm3
Schaummenge nach 5 min Standzeit          :           170 cm3.
```

Die Viskositätswerte wie im Beispiel 1 sind nachstehend aufgeführt.

| Temperatur | Brookfield-Viskosität bei | | |
| --- | --- | --- | --- |
| | 0,3 Upm | 30 Upm | Verdünnung |
| | | | 75 : 25 (AEA-Wasser) |
| (°C) | (mPa.s) | | 0,3 UpM |
| + 20 | 2000 | 400 | 5000 |
| ± 0 | 1000 | 500 | 12000 |
| - 5 | 1500 | 520 | 16000 |
| - 10 | <1000 | 470 | 19000 |
| - 25 | <1000 | 900 | - |
| - 35 | <1000 | 700 | - |

Beispiel 3

Es wurde eine erfindungsgemäße Zusammensetzung hergestellt durch Mischen der folgenden Komponenten:
a)
30 Gew.-% Diethylenglykol und
25 Gew.-% 1,2-Propylenglykol
b) 35 Gew.-% einer 1,5 gew.-%igen Verdickerlösung mit CARBOPOL® 934
c)
1,0 Gew.-% Butin-2-diol-1,4
0,1 Gew.-% Sebazinsäure
0,07 Gew.-% Natriumnitrat
d) 0,07 Gew.-% eines Oxoalkohols mit einer Kohlenstoffatomzahl von 13 bis 15 oxethyliert mit 3 Molekülen Ethylenoxid
e)
0,2 Gew.-% Natriumhydroxid
0,1 Gew.-% Kaliumhydroxid
f) 0,05 Gew.-% Oxidationsstabilisator
g) 8,43 Gew.-% Wasser.
Das Mischen der Komponenten a) bis g) erfolgt wie in Beispiel 1. Die fertige Mischung hatte den pH-Wert 7,2.
Die "holdover time" betrug 37 min und für die Verdünnung 75 : 25 (AEA-Wasser) betrug diese Zeit 22 min.

Schaumprüfung wie in Beispiel 1:
Schaummenge nach 5 min                    :          250 cm3
Schaummenge nach 5 min Standzeit          :          100 cm3.

Die Viskositätswerte wie im Beispiel 1 sind nachstehend aufgeführt.

6

EP 0 360 183 B1

| Temperatur | Brookfield-Viskosität bei | | |
| | 0,3 Upm | 30 Upm | Verdünnung 75 : 25 (AEA-Wasser) |
| (°C) | (mPa · s) | | 0,3 UpM |
| --- | --- | --- | --- |
| + 20 | 1700 | 330 | 8000 |
| ± 0 | 1900 | 510 | 10000 |
| − 5 | 2000 | 450 | 12000 |
| − 10 | 1900 | 440 | 14000 |
| − 25 | 1000 | 160 | − |
| − 35 | <1000 | 330 | − |

Vergleichsbeispiel 1

Es wurde ein Mittel hergestellt, das die Spezifikation der Association of European Airlines (AEA) "Recommendations for de-icing/anti-icing of aircraft on ground 3nd Edition, October 1st, 1987 Part 1, i.e. "Material specification de-/anti-icing fluid, aircraft" erfüllt.

Ein solches Mittel wurde hergestellt durch das Mischen folgender Komponenten:

a) 50 Gew.-% 1,2-Propylenglykol

b) 40 Gew.-% einer 1,5 gew.-%igen Verdickerlösung mit CARBOPOL® 934

c)

0,1 Gew.-% Sebazinsäure

1,0 Gew.-% Butin-2-diol-(1,4)

0,5 Gew.-% Benzotriazol

d) 0,2 Gew.-% eines Alkylphenol oxethyliert mit 8 Mole Ethylenoxid.

e) 0,45 Gew.-% Triethanolamin

f) 0,45 Gew.-% Natriumhydroxid

g)

0,05 Gew.-% Oxidationsstabilisator

8,75 Gew.-% Wasser.

Die fertige Mischung hatte den pH-Wert 8,5.

Die "holdover time" betrug 32 min.

Die Viskositätswerte wie im Beispiel 1 sind nachstehend aufgeführt.

| Temperatur | Brookfield-Viskosität bei | | |
| | 0,3 Upm | 30 Upm | Verdünnung 75 : 25 (AEA-Wasser) |
| (°C) | (mPa · s) | | 0,3 UpM |
| --- | --- | --- | --- |
| + 20 | 8000 | 1400 | 3000 |
| ± 0 | 8000 | 1860 | 7000 |
| − 5 | 8000 | 1940 | 7500 |
| − 10 | 8000 | 1980 | 4000 |
| − 25 | 7500 | 2000 | − |
| − 35 | 13000 | >2000 | − |

Das so hergestellte Enteisungsmittel bzw. Vereisungsschutzmittel erfüllt die vorgenannte AEA-Spezifikation, hinsichtlich der "holdover time" und der maximal zulässigen Viskositäten, aber aufgrund der Ruhe-Viskosität bei °C von 8000 mPa.s bei 0,3 Upm ist das Abfließverhalten nocht nicht optimal.

Vergleichsbeispiel 2

Es wurde ein Mittel wie in Beispiel 3 hergestellt. Dabei wurde lediglich die Komponente d) durch die gleiche

7

Menge eines anderen nichtionischen Tensides, einem Alkylphenol, umgesetzt mit 8 Molekülen Ethylenoxid, ersetzt.

Die fertige Mischung hatte einen pH-Wert 7,2.

Das Vergleichsmittel hatte folgende Eigenschaften:

Die "holdover time" betrug lediglich 15 min.

Die Viskositätswerte bei verschiedenen Temperaturen wie in Beispiel 1 sind nachstehend aufgeführt.

| Temperatur | Brookfield-Viskosität bei | | |
|---|---|---|---|
| | 0,3 Upm | 30 Upm | Verdünnung 75 : 25 (AEA-Wasser) |
| (°C) | (mPa · s) | | 0,3 UpM |
| + 20 | 2000 | 380 | 3000 |
| ± 0 | <2000 | 330 | 3500 |
| - 5 | <2000 | 310 | 3000 |
| - 10 | <2000 | 250 | 3000 |
| - 25 | <2000 | 150 | - |
| - 35 | <2000 | 350 | - |

## Patentansprüche

1. Enteisungsmittel bzw. Vereisungsschutzmittel für Flugzeuge auf der Basis von Glykolen, Wasser und vernetzter Polyacrylsäure als Verdicker, enthaltend im wesentlichen:

a) 40 bis 70 Gew.-% eines Glykols aus der Gruppe der Alkylenglykole mit 2 bis 3C-Atomen und/oder Oxalkylenglykole mit 4 bis 6C-Atomen oder deren Gemische,

b) 0,1 bis 1,0 Gew.-% einer vernetzten Polyacrylsäure, die in Form einer 0,5 gew.-%igen wäßrigen Lösung bei einem pH-Wert von 7,0 eine Viskosität von 5000 bis 60000 mPa · s bei 20°C, gemessen mit einem Brookfield-Viskosimeter bei 20 UpM, aufweist,

c) 0,02 bis 1,5 Gew.-% eines nichtionischen Tensids aus Alkoholen mit 10 bis 20C-Atomen, die mit 1 bis 10 Molekülen niedermolekularem Alkoxid umgesetzt sind,

d) 0,05 bis 2,0 Gew.-% mindestens eines Korrosionsinhibitors,

e) 0,2 bis 0,7 Gew.-% einer Mischung aus Kalium- und Natriumhydroxid mit bis zu 70 Gew.-% Kaliumhydroxid oder reinem Natriumhydroxid zur Einstellung des pH-Wertes des Mittels auf 7,0 bis 9,5,

f) 0,01 bis 0, 1 Gew.-% Oxidationsstabilisator und

g) Wasser als den restlichen Gewichtsanteil

alle Gewichtsprozente jeweils bezogen auf das Gewicht des Mittels.

2. Mittel nach Anspruch 1, dadurch gekennzeichnet, daß die Komponente (c) ein mit 1 bis 10 Molekülen Ethylenoxid oxethylierter Oxoalkohol mit 10 bis 20 C-Atomen in der Kohlenstoffkette ist.

3. Mittel nach Anspruch 1, dadurch gekennzeichnet, daß die Komponente (e) aus einer Mischung aus Kalium- und Natriumhydroxid im Verhältnis 2,5 : 1 bis 1 : 2,5 besteht.

4. Mittel nach Anspruch 1, dadurch gekennzeichnet, daß es die Komponenten a) bis f) in den nachstehend angegebenen Mengen enthält:

a) 50 bis 60 Gew.-%

b) 0,2 bis 0,6 Gew.-%

c) 0,02 bis 1,5 Gew.-%

d) 0,1 bis 2,0 Gew.-%

e) 0,2 bis 0,7 Gew.-%

f) 0,01 bis 0,1 Gew.-%

g) Wasser als den Rest.

**EP 0 360 183 B1**

## Claims

1. A deicing/antiicing fluid for aircraft based on a glycol, water and a crosslinked polyacrylic acid as thickener, containing essentially:
   a) 40 - 70% by weight of a glycol from the group of the alkylene glycols of 2 or 3 carbon atoms and oxyalkylene glycols of from 4 to 6 carbon atoms or a mixture thereof,
   b) 0.1 - 1.0% by weight of a crosslinked polyacrylic acid which in the form of a 0.5% strength by weight aqueous solution at pH 7.0 has a viscosity of from 5000 to 60,000 mPa.s at 20°C, measured with a Brookfield viscometer at 20 rpm,
   c) 0.02 - 1.5% by weight of a nonionic surfactant formed from an alcohol of from 10 to 20 carbon atoms reacted with from 1 to 10 molecules of a low molecular weight alkoxide,
   d) 0.05 - 2.0% by weight of one or more corrosion inhibitors,
   e) 0.2 - 0.7% by weight of a mixture of potassium hydroxide and sodium hydroxide containing up to 70% by weight of potassium hydroxide, or of pure sodium hydroxide, to adjust the fluid pH to 7.0 - 9.5,
   f) 0.01 - 0.1% by weight of an antioxidant, and
   g) water to 100% by weight, all the weight percentages being based on the weight of the fluid.

2. A fluid as claimed in claim 1, wherein component (c) is an oxo alcohol of from 10 to 20 carbon atoms in the carbon chain which has been ethoxylated with from 1 to 10 molecules of ethylene oxide.

3. A fluid as claimed in claim 1, wherein component (e) is a mixture of potassium hydroxide and sodium hydroxide in a ratio of from 2.5:1 to 1:2.5.

4. A fluid as claimed in claim 1, which contains components a) to f), in the following amounts:
   a) from 50 to 60% by weight
   b) from 0.2 to 0.6% by weight
   c) from 0.02 to 1.5% by weight
   d) from 0.1 to 2.0% by weight
   e) from 0.2 to 0.7% by weight
   f) from 0.01 to 0.1% by weight
   g) water to make up to 100% by weight.

## Revendications

1. Agent de dégivrage ou d'antigivrage pour avions à base de glycols, d'eau et d'acide polyacrylique réticulé en tant qu'épaississant, contenant essentiellement :
   a) 40 à 70% en poids d'un glycol du groupe comprenant les alkylèneglycols ayant 2 ou 3 atomes de carbone et/ou les oxyalkylèneglycols ayant de 4 à 6 atomes de carbone ou leurs mélanges,
   b) 0,1 à 1,0% en poids d'un acide polyacrylique réticulé qui présente une viscosité de 5000 à 60000 mPa.s à 20°C, mesurée avec un viscosimètre Brookfield à 20 t/mn sous forme d'une solution aqueuse à 0,5% en poids à un pH de 7,0,
   c) 0,02 à 1,5% en poids d'un tensio-actif non ionique à base d'alcools ayant de 10 à 20 atomes de carbone que l'on a fait réagir avec 1 à 10 molécules d'un oxyde d'alkylène de bas poids moléculaire,
   d) 0,05 à 2,0% en poids d'au moins un inhibiteur de corrosion,
   e) 0,2 à 0,7% en poids d'un mélange d'hydroxydes de potassium et de sodium contenant jusqu'à 70% en poids d'hydroxyde de potassium ou d'hydroxyde de sodium pur pour donner à l'agent un pH de 7,0 à 9,5,
   f) 0,01 à 0,1% en poids d'un stabilisateur d'oxydation et
   g) de l'eau pour la proportion en poids restante, tous les pourcentages pondéraux étant donnés par rapport au poids de l'agent.

2. Agent selon la revendication 1, caractérisé en ce que le composant c) est un alcool oxo ayant de 10 à 20 atomes de carbone dans son squelette carboné que l'on a oxyéthylé avec 1 à 10 molécules d'oxyde d'éthylène.

3. Agent selon la revendication 1, caractérisé en ce que le composant e) se compose d'un mélange d'hydroxydes de sodium et de potassium dans un rapport de 2,5 : 1 à 1 : 2,5.

9

4. Agent selon la revendication 1, caractérisé en ce qu'il contient les composants a) à f) dans les proportions données ci-dessous :

a) 50 à 60 % en poids
b) 0,2 à 0,6 % en poids
c) 0,02 à 1,5 % en poids
d) 0,1 à 2,0 % en poids
e) 0,2 à 0,7 % en poids
f) 0,01 à 0,1 % en poids
g) de l'eau comme complément.